# EUROPEAN PATENT APPLICATION

(11) **EP 4 706 993 A1**
(43) Date of publication of application: **11.03.2026**
(21) Application number: 25198616.2
(22) Date of filing: 28.08.2025
(51) Int. Cl.: B60C 11/03, B60C 11/12

(54) **TIRE WITH SIPES**

(30) Priority: 10.09.2024 US 202418829824
(71) Applicant: The Goodyear Tire & Rubber Company, Akron, OH 44316 (US)
(72) Inventor: Bokken, Stephane Laurent Claude, L-7750 Colmar-Berg (LU); SCHERPENBERGS, Jerome, L-7750 Colmar-Berg (LU)
(74) Representative: Kutsch, Bernd

(57) **Abstract**

A tire (1) is disclosed having a circumferential tread portion (10) comprising a first circumferential row (100) of shoulder tread blocks (110) which extend from a first circumferential shoulder portion of the tread portion (10) towards a circumferential centerline (C) of the tread portion and which are bent in a direction of rotation of the tire (1); a second circumferential row (200) of shoulder tread blocks (210) which extend from a second circumferential shoulder portion of the tread portion (10), said second circumferential shoulder portion being axially opposite to the first shoulder portion, towards the circumferential centerline (C) and which are bent in the direction of rotation of the tire (1); and at least two circumferential rows (300, 400) of center tread blocks (410, 310) arranged axially between the first circumferential row (100) of shoulder tread blocks (110) and the second circumferential row (200) of shoulder tread blocks (210). At least one shoulder tread block (110, 210) of the shoulder tread blocks has an elongated shape bent in the direction of rotation and comprises a sipe (120, 220). The sipe (120, 220) comprises two elongated sipe portions (122, 222), wherein each of the elongated sipe portions has an axially inner end region, an axially outer end region, and an intermediate sipe portion extending between the axially inner end region and the axially outer end region, and wherein both intermediate sipe portions of the elongated sipe portions extend essentially in parallel to each other and along the elongated shape of the shoulder tread block (110, 210), and a joint sipe portion (123, 223) extending essentially along the elongated shape of the shoulder tread block (110, 210). The elongated sipe portions (122, 222) converge into the joint sipe portion (123, 223).

## Description

### Field of the Invention

The present invention is directed to a tire, such as a pneumatic winter and/or all-season tire, comprising tread blocks with sipes.

### Background of the Invention

Modern all-season tires and winter tires typically have tread portions comprising tread blocks with a plurality of sipes intended to provide improved grip on snow. While developments have been made in the field of all-season and winter tires over the past years, significant room for improvement remains, particularly to provide such tires with advanced grip, particularly on snow.

### Summary of the Invention

The invention relates to a tire in accordance with claims 1, 10 or 11, respectively.

Dependent claims refer to preferred embodiments of the invention.

In a first preferred aspect of the present invention, the invention is directed to a tire having a circumferential tread portion comprising a first circumferential row of shoulder tread blocks, which extend from a first circumferential shoulder portion of the tread portion towards a circumferential centerline of the tread portion, and which are bent in a direction of rotation of the tire. Furthermore, the tread portion has a second circumferential row of shoulder tread blocks, which extend from a second circumferential shoulder portion of the tread portion, being axially opposite to the first shoulder portion, towards the circumferential centerline, and which are bent in the direction of rotation of the tire. Furthermore, the tread portion comprises at least two circumferential rows of center tread blocks, arranged axially between the first circumferential row of shoulder tread blocks and the second circumferential row of shoulder tread blocks, wherein at least one shoulder tread block of the shoulder tread blocks has an elongated shape bent in the direction of rotation, and comprises a sipe. Said sipe comprises two elongated sipe portions, wherein each of the elongated sipe portions has an axially inner end region, an axially outer end region, and an intermediate sipe portion extending between the axially inner end region and the axially outer end region, and wherein both intermediate sipe portions of the elongated sipe portions extend essentially in parallel to each other and along the elongated shape of the shoulder tread block. Moreover, the sipe comprises a joint sipe portion extending essentially along the elongated shape of the shoulder tread block, and the elongated sipe portions converge into the joint sipe portion.

In a second preferred aspect of the present invention, the invention is directed to a tire having a circumferential tread portion comprising tread blocks, wherein at least one of the tread blocks has an elongated shape extending transversely to a circumferential centerline of the tread portion, and comprises a sipe which comprises i) a pair of elongated sipe portions extending predominantly along the elongated shape of the tread block, and ii) a joint sipe portion extending along the elongated shape of the tread block, wherein the elongated sipe portions converge into the joint sipe portion.

In a third preferred aspect of the present invention, the invention is directed to a tire having a circumferential tread portion comprising tread blocks, wherein at least one of the tread blocks comprises a sipe comprising at least one elongated sipe portion extending transversely to a circumferential centerline of the tread portion, and wherein the elongated sipe portion comprises a) a radially outer undulated sipe portion, extending with an undulated shape along the elongated sipe portion, b) a radially inner sipe portion, extending with an essentially linear shape along the elongated sipe portion, and c) a transition portion, provided radially between the radially outer undulated sipe portion and the radially inner sipe portion, and having a shape radially transitioning from the undulated shape of the radially outer undulated sipe portion to the linear shape of the radially inner sipe portion along the elongated sipe portion.

Preferably, the tire is one of more of a winter tire, an all-season tire, a pneumatic tire, a radial tire, a passenger car tire, and a truck tire.

Preferably, the tire is a pneumatic tire comprising a pair of sidewalls and having a three peak mountain snowflake symbol on at least one of the sidewalls.

### Brief Description of the Drawings

The invention will be described by way of example and with reference to the accompanying drawings in which:
FIG. 1 is a schematic top view of a pneumatic tire according to an embodiment of the present invention;
FIG. 2 is an enlarged schematic view of the tread portion of the tire shown in Figure 1;
FIG. 3 is a schematic top view of a tire's tread block including a sipe, in accordance with another embodiment of the present invention;
FIG. 4 is a schematic partially transparent cut view of a portion of the tread block shown in Figure 3, along an elongated sipe portion of the sipe in said tread block;
FIG. 5 is a schematic perspective view of a metal blade, e.g., suitable for molding the sipe as shown in the embodiment of Figure 3;
FIG. 6 is a schematic top view of the metal blade shown in Figure 5; and
FIG. 7 is a schematic cross section of an upper portion of an elongated blade portion along an elongated direction, showing details of an undulated shape of the upper portion.

### Detailed Description of Preferred Embodiments of the Invention

According to the first aspect, the invention is directed to a tire, preferably a pneumatic tire, having a circumferential tread portion comprising a first circumferential row of shoulder tread blocks, which extend from a first circumferential shoulder portion of the tread portion towards a circumferential centerline of the tread portion (and, preferably, transversely to said centerline), and which are bent in (or towards) a direction of rotation of the tire. Additionally, the tread portion has a second circumferential row of shoulder tread blocks, which extend from a second circumferential shoulder portion of the tread portion, being axially opposite to the first shoulder portion, towards the circumferential centerline (and, preferably, transversely to said centerline), and which are bent in (or towards) the direction of rotation of the tire. Furthermore, the tread portion comprises at least two circumferential rows of center tread blocks, arranged axially between the first circumferential row of shoulder tread blocks and the second circumferential row of shoulder tread blocks, wherein at least one shoulder tread block of the shoulder tread blocks has an elongated shape bent in (or towards) the direction of rotation, and comprises a sipe. Said sipe comprises two elongated sipe portions, wherein each of the elongated sipe portions has an axially inner end region, an axially outer end region, and an intermediate sipe portion (or region) extending between the axially inner end region and the axially outer end region, and wherein both intermediate sipe portions of the elongated sipe portions extend essentially parallel to each other and along the elongated shape of the shoulder tread block. Moreover, the sipe comprises a joint sipe portion (or elongated joint sipe portion) extending essentially along the elongated shape of the shoulder tread block, and wherein the elongated sipe portions converge into the joint sipe portion.

Such a tread portion comprising one or more sipes having the elongated sipe portions converging into the joint sipe portion has been found to offer an advanced sipe design. In particular, the connection of both elongated sipe portions with their parallel intermediate sipe portions via a joint sipe portion helps to provide a balanced stiffness of the tread block, particularly compared to two separate sipes extending along the elongated direction of the tread block. In addition, the sipes provide advanced snow grip.

In one embodiment, each of the intermediate sipe portions comprises an undulated sipe portion which is undulated along the elongated sipe portion. In other words, the intermediate sipe portion comprises an undulated shape along the elongated sipe portion and/or along an elongated direction. The undulated shape may also be described as a wavy shape. The provision of an undulated shape in each intermediate sipe portion further improves snow grip.

In another embodiment, both axially inner end regions of the elongated sipe portions converge into an axially outer end region of the joint sipe portion.

In still another embodiment, the joint sipe portion extends from its axially outer end region (where optionally both elongated sipe portions are merging with their axially inner end regions) linearly towards (and/or transversely to) the circumferential centerline of the tire. In other words, the joint sipe portion is preferably devoid of an undulated elongated portion.

In still another embodiment, the tire is a directional tire (which is a designation known in the tire art), sometimes also mentioned as unidirectional tire, such as having a defined direction of rotation, which may be indicated on at least one sidewall of the tire, e.g., by an arrow. When reference is made herein to a curvature or bending in and/or towards a direction of rotation of the tire, this does not necessarily mean that such a curving or bending ends parallel to the direction of rotation of the tire (which is in parallel to the circumferential direction of the tire and/or the circumferential centerline of the tread portion). For instance, angles between 0° and 90° of an elongated direction with the circumferential direction are possible, such as at axially inner ends or axially inner regions of tread blocks.

In still another embodiment, at least one, preferably each, of the intermediate sipe portions comprises a) a radially outer undulated sipe portion, extending with an undulated shape along the elongated sipe portion, b) a radially inner (intermediate) sipe portion, extending with an essentially linear shape along the elongated sipe portion; and c) a (intermediate) transition portion, provided radially between the radially outer undulated sipe portion and the radially inner sipe portion, and which has a shape radially transitioning from the undulated shape of the radially outer undulated sipe portion to the linear shape of the radially inner sipe portion, along the elongated sipe portion. Each of these portions is preferably curved or bent towards the circumferential centerline of the tread portion. Providing the intermediate sipe portion with such a distribution of radial portions, or in other words radial zones, helps to provide an improved snow biting effect when the tire rolls over a snow-covered surface or road.

In still another embodiment, the shape of the transition portion comprises a radially inwards tapering undulated shape (extending along the elongated sipe portion), tapering from the undulated shape (and particularly an amplitude of the undulated shape) of the radially outer undulated portion to the linear shape of the radially inner sipe portion. Such a radially inwards tapering undulated shape helps to provide an improved snow biting effect or snow grip of the elongated sipe portion.

In still another embodiment the radially inwards tapering undulated shape has an amplitude of undulation which decreases in an inner radial direction. Such an amplitude is preferably determined perpendicular to the elongated direction or shape and perpendicular to the radial direction. For instance, at a radially innermost position (or elongated line), said amplitude is zero, whereas it has the amplitude of the undulated shape of the radially outer undulated sipe portion in a radially outermost position (or elongated line). Extending along a portion or tread block does not necessarily mean herein that such an extension is along a whole length of such a portion or tread block.

In still another embodiment, the undulated shape has along the intermediate sipe portion one or more of an essentially constant amplitude, and an essentially constant wavelength.

In still another embodiment, the shape of the transition portion continuously transitions from the undulated shape of the radially outer portion to the linear shape of the radially inner portion along a radially inner direction.

In still another embodiment, the undulated shape has a wavelength along the elongated sipe portion within a range 3 mm to 30 mm, preferably from 3 mm to 10 mm. In addition, or alternatively, the undulated shape has an amplitude, preferably essentially perpendicular to the elongated sipe portion, within a range of 0.6 mm to 10 mm, preferably within a range of 0.8 mm to 8 mm (wherein the amplitude is determined herein between a maximum and a minimum of the wave, which may also be described as peak-to-peak amplitude). In addition, or alternatively, the undulated shape extends in a truncated wave shape along the elongated direction.

In still another embodiment, the radially outer sipe portion extends from a radially outermost surface of the tread block in a radially inner direction, preferably over a range of 10% to 20% of a total radial height of the tread block. A radial height of a tread block can be determined in a radial direction measured from the bottom of an adjacent groove, which preferably comprises a (physical) tread wear indicator, or equivalent. Treadwear indicators for passenger cars typically have a radial height of 1.6 mm.

In still another embodiment, the transition portion having the shape transitioning from the shape of the radially outer undulated sipe portion to the shape of the radially inner sipe portion radially extends over 30% to 50% of the total radial height of the tread block, and/or wherein a radially inner side of the transition portion is radially below a height of 4 mm of the total radial height of the tread block, measured in an outer radial direction from a bottom of an adjacent groove of the tread portion, preferably comprising a (physical) tread wear indicator. Thus, when the tire is worn to a tread block height of remaining 4 mm (which is typically a recommended tread block height for exchanging a winter or all-season tire) the tire tread, or the tread block, respectively, still shows the wavy transition portion on its radially outermost surface.

In still another embodiment, the radially inner sipe portion extends from a radial depth radially below a radially outermost surface of a treadwear indicator in a radially outer direction, such as over 10% to 30% of the total radial height of the tread block. Thus, when tire tread wear reaches the treadwear indicator, the tread, or tread block, will show the radially inner sipe portion at its radially outermost surface.

In still another embodiment, the undulated sipe portion has a truncated wave shape and/or comprises truncated maxima and/or minima, extending along the elongated tread block. Optionally a flattened maximum and/or minimum of the truncated wave shape has a width in the elongated direction within a range of 0.5 mm to 5 mm.

In still another embodiment the radially outer undulated sipe portion ends in an inner radial direction, at a position where the amplitude of the undulated shape starts to decrease. In addition, or alternatively, the radially inner portion ends in an outer radial direction, where an undulated shape (of the transition portion) starts to appear.

In still another embodiment, a maximum radial depth of the sipe and/or the elongated intermediate sipe portion is within a range of 3 mm to 10 mm, preferably within a range of 4 mm to 8 mm.

In still another embodiment, each of the elongated sipe portions has an elongated length which is from 5 to 30 times (preferably, from 10 to 20 times) larger than an elongated length of the joint sipe portion. The length of the joint sipe portion is measured from one of its ends (e.g., its axially inner end or end region) along its elongated shape towards a point (or position) at which the elongated sipe portions merge and/or converge into the joint sipe portion. The length of each elongated sipe portion is measured (perpendicular to the radial direction) from the point at which the elongated sipe portion merge and/or converge into the joint sipe portion towards an axially opposite end or end region, such as an axially outer end or end region. Thus, the elongated sipe portions are preferably substantially longer than the joint sipe portion, thereby providing relatively long portions biting snow and a shorter joint portion helping to provide stability to the tread block.

In still another embodiment, the joint sipe portion ends at an axially inner surface of the shoulder tread block so as to form an axially inner opening at the axially inner surface of the shoulder tread block.

In still another embodiment, the axially outer end region of each elongated sipe portion is formed as a dead end within an axially outer area of the shoulder tread block.

In still another embodiment, both axially outer end regions of the elongated sipe portions are circumferentially spaced apart from each other. Typically, also the intermediate portions are circumferentially spaced apart from each other. Preferably, the elongated sipe portions join, or converge, only via their axially inner end regions into the joint sipe portion.

In still another embodiment, at least one center tread block of the center tread blocks comprises a center tread block sipe which is essentially aligned with the joint sipe portion (and/or an elongated extension of the joint sipe portion) of an axially adjacent shoulder tread block). Such an arrangement helps to provide a relative homogeneous snow grip and/or stiffness over a lateral width of the tread portion or tire.

In still another embodiment, the center tread block sipe has an elongated shape comprising i) two opposite linearly extending end portions, and ii) an undulated intermediate portion extending between the opposite linearly extending end portions.

In still another embodiment, an undulated shape, may consist of or comprise one or more of a wavy shape, a truncated wavy shape, and a zig-zag shape.

In still another embodiment, axially inner end regions of center tread blocks of a first row of the rows of center tread blocks and axially inner end regions of center tread blocks of an adjacent second row of the rows of center tread blocks are staggered along the circumferential centerline of the tread portion. In other words, the center tread blocks mesh or interlock along and/or on the circumferential centerline of the tread portion. For instance, such an arrangement helps to provide a stiff (axial) center area of the tread which helps, e.g., to improve braking performance, such as dry braking.

In still another embodiment, the tire is one or more of a winter tire, an all-season tire, a pneumatic tire, a radial tire, a passenger car tire, and a truck tire.

In still another embodiment, the tire is a non-pneumatic tire.

In still another embodiment, the tire is a pneumatic tire comprising a pair of sidewalls and having a three peak mountain snowflake symbol (3PMS symbol) on at least one of the sidewalls. In particular, modern all-season and winter tires may typically carry such a symbol.

In still another embodiment, the sipe can be mentioned as a snow sipe. In the tire art, the person skilled in the art typically distinguishes between grooves and sipes. For instance, a sipe may typically have a width, or sipe width (measured perpendicular to a local extension of the sipe), which is less than 1.6 mm, such as within a range of 0.3 mm to 1.5 mm. Such small widths help to obtain advanced grip on snow.

In still another embodiment, the elongated sipe portions and the joint sipe portion essentially form together one of a wishbone-shaped sipe, and a tuning fork-shaped sipe. In this context, it is noted that such shapes shall preferably also include bent or curved wishbone or tuning fork shapes.

In still another embodiment, the joint sipe portion, has a radial depth which is at least 10%, preferably at least 20% smaller than a maximum radial depth of the sipe in the intermediate portion. Such a reduced radial depth in the joint sipe portion helps to further increase the stiffness of the tread block, such as at an axially inner side of the tread block.

In still another embodiment, an axially outer end region of each elongated sipe portion has a radial depth which is at least 10%, preferably at least 20% smaller than a maximum radial depth of the sipe in the intermediate sipe portion. Such a reduced radial depth in the axially outer end region helps to increase the stiffness of the tread block in the end region.

In still another embodiment, the tread block has in the radially inner sipe portion an axially outward protrusion along the elongated direction, protruding into the radially inner sipe portion from a (radially inner) bottom of the sipe and/or extending transversely to the elongated sipe portion. This protrusion helps to improve tread block stiffness, particularly to limit block deformation during braking and/or acceleration.

In still another embodiment, said protrusion is in a center portion between both end regions of the elongated sipe portion and/or the undulated portion.

In still another embodiment, the axially outer end region of each elongated sipe portion extends essentially linearly. Optionally, the undulated sipe portion has a length which is within a range of 4 to 10 times the length of the axially outer end region extending essentially linearly. In addition, or alternatively an axially inner end region of the elongated sipe portion, which preferably converges towards the joint sipe portion, extends essentially linearly. Optionally, the undulated sipe portion, e.g. the radially outer undulated sipe portion and/or the transition portion, has a length which is within a range of 4 to 10 times the length of the axially inner end region extending essentially linearly.

In still another embodiment, axially neighboring center tread blocks of the rows of center tread blocks are essentially arranged in a V-shape and/or are staggered along the center line of the tread portion.

In still another embodiment, the center tread blocks have an elongated shape, preferably extending essentially perpendicular to the radial direction of the tire and/or transversely to the circumferential centerline of the tire. Optionally, a maximum elongated length of at least one of the center tread blocks (measured along the elongated shape) is from 3 to 10 times larger than a maximum width of the center tread blocks measured perpendicular to the elongated shape (and to the radial direction of the tire).

In still another embodiment, a center tread block sipe of at least one of the center tread blocks extends over the center tread block's whole elongated length.

In still another embodiment, the sipe of the shoulder tread block extends at least over 80% of an elongated length of the respective shoulder tread block. Preferably, the sipe extends over at most 95% of the elongated length of the respective shoulder tread block, measured in parallel to the elongated shape of the tread block.

In still another embodiment, the elongated sipe portion extends at least over 70% of an elongated length of the respective shoulder tread block. Preferably, the elongated sipe portion extends over at most 90% of the elongated length of the respective shoulder tread block.

In still another embodiment, at least one shoulder tread block, or a row of shoulder tread blocks, respectively, extends over more than 25%, preferably over more than 33%, of the axial width of the tread portion, measured along the axial direction of the tire. Optionally, the at least one shoulder tread block, or the row of shoulder tread blocks, extends over at most 45%, preferably over at most 40%, of the axial width of the tread portion. In addition, or alternatively, the same axial widths apply to the sipes of the shoulder tread blocks. However, preferably, the axial width of a sipe of a shoulder tread block is smaller, preferably at least 5% smaller, than the axial width of a shoulder tread block. For instance, as mentioned above, the sipe in a shoulder tread block, e.g., both of its elongated portions may end at an axially outer side as a dead end in the shoulder tread block.

In still another embodiment, at least one center tread block, or a row of center tread blocks, preferably each row of center tread blocks, extends over more than 10%, preferably over more than 15%, or even more preferably over more than 20%, of the axial width of the tread portion. It is noted that it is possible that a sum of axial widths of all rows of tread blocks may be over 100% as adjacent rows may axially overlap, such as in view of one or more of their orientation, staggering, and bending in the direction of rotation of the tire. Optionally, the at least one center tread block, or the row of center tread blocks extends over at most 35%, preferably over at most 30%, of the axial width of the tread portion. In addition, or alternatively, the same axial widths may apply to the center tread block sipes.

In still another embodiment, the two rows of center tread blocks form a zig-zag center groove extending along a center line of the tread portion, e.g., extending alternatingly on both axial sides of the center line.

In still another embodiment, each shoulder tread block of one of the rows of shoulder tread blocks has an adjacent center tread block of an adjacent row of center tread blocks, wherein the adjacent center tread block extends along a same elongated direction as an axially inner end of the shoulder tread block. In addition, or alternatively, a shoulder tread block and an adjacent center tread block may be delimited by at least two common (e.g., lateral) grooves.

In still another embodiment, two circumferentially neighboring shoulder tread blocks and two adjacent circumferentially neighboring center tread blocks form together a groove (e.g., a lateral groove) essentially extending from the center line of the tire towards an axially outer edge of the tread portion. Optionally, said groove has a maximum circumferential width of 20% to 50%, preferably of 25% to 45% of a maximum circumferential width of the shoulder tread blocks.

In still another embodiment, the shoulder tread block has an elongated shape extending essentially perpendicular to the radial direction of the tire.

In still another embodiment, an undulated portion of a center tread block sipe extends over at least 70% of the elongated length of the center tread block, preferably over at most 95% of the elongated length of the center tread block.

In still another embodiment, one or more shoulder tread blocks are devoid of one or more of further sipes and further grooves. In other words, such blocks comprise only one sipe.

In still another embodiment, one or more center tread blocks are devoid of one or more further sipes. In other words, such blocks comprise only one sipe.

In still another embodiment, each center tread block is bent and/or directed towards the direction of rotation with an angle within a range of 35° to 65°, preferably within a range of 40° to 60°. The same angle may apply to an elongated extension of a center tread block groove, which preferably extends essentially in parallel to an elongated shape of its center tread block. It is also possible to mention that each center tread block extends transversely to the circumferential centerline of the tread portion at such angles.

In still another embodiment, each tread block has a maximum radial height within a range of 5 mm to 12 mm, measured from the bottom of an adjacent (tread) groove. This height can also be mentioned as tread depth.

In still another embodiment, a sipe of a center tread block has an undulated sipe portion including from 10 to 20 (single) wave shapes, or in other words wavelengths, behind one another, and along an elongated shape of the center tread block, or in other words, along the elongated center tread block.

In still another embodiment, an elongated sipe portion, or intermediate sipe portion, of a shoulder tread block has from 10 to 30, preferably from 15 to 30 (single) wave shapes, or wavelengths, behind one another.

In still another embodiment, one or more of the undulated sipe portions have a distance from one or more of an axially inner end of the respective tread block and an axially outer end of the respective tread block, which is within a range of 2 mm to 10 mm, measured along an elongated extension of the respective tread block.

According to the second aspect, the invention is directed to a tire having a circumferential tread portion comprising tread blocks (e.g., shoulder tread blocks), wherein at least one of the tread blocks has an elongated shape extending transversely to a circumferential centerline of the tread portion, and comprises a sipe which comprises i) a pair of elongated sipe portions extending predominantly along the elongated shape of the tread block, and ii) a joint sipe portion extending along the elongated shape of the tread block, wherein the elongated sipe portions converge (and/or merge) into the joint sipe portion.

Similar to the first aspect, the above sipe has elongated sipe portions merging into one joint sipe portion, preferably extending towards a circumferential centerline of the tire or tread portion. Such a sipe construction can help to provide a good balance between tread block stiffness and snow grip properties of the sipe.

In one embodiment, each sipe portion comprises a first end region and a second end region and an intermediate sipe portion (or elongated intermediate sipe portion) extending between both end regions, along the elongated shape of the tread block. Preferably, both intermediate sipe portions extend essentially parallel to each other. It is further noted that extending predominantly along the elongated shape of the tread block may also include an undulated shape and/or portion extending along the elongated shape of the tread block.

The features of the first aspect, or of one or more of its embodiments, can be combined with the second aspect.

According to the third aspect, the invention is directed to a tire having a circumferential tread portion comprising tread blocks (such as one or more rows of shoulder tread blocks), wherein at least one of the tread blocks (or at least a majority or all of the tread blocks, e.g. of the shoulder tread blocks) comprises a sipe comprising at least one elongated sipe portion extending transversely to a circumferential centerline of the tread portion, and wherein the elongated sipe portion comprises a) a radially outer undulated sipe portion, extending with an undulated shape along the elongated sipe portion, b) a radially inner (intermediate) sipe portion, extending with an essentially linear shape along the elongated sipe portion, and c) an (intermediate) transition portion, provided radially between the radially outer undulated sipe portion and the radially inner sipe portion, and having a shape radially transitioning from the undulating shape of the radially outer undulated sipe portion to the linear shape of the radially inner sipe portion along the elongated sipe portion.

As mentioned above, such a radial distribution of an undulated portion, a transition portion, and a linearly shaped portion helps to provide an advanced snow biting effect while providing still good tread block stability, particularly tread block stiffness.

In still another embodiment, the sipe comprises two of the elongated sipe portions, and wherein each elongated sipe portion comprises an axially inner end region, an axially outer end region and an intermediate sipe portion, wherein both intermediate sipe portions of the elongated sipe portions extend essentially parallelly through the tread block and are bent in a direction of rotation of the tire, and/or wherein the sipe further comprises a joint sipe portion, wherein, optionally, both axially inner end regions of the elongated sipe portions converge into the joint sipe portion extending away from the axially inner end regions of the elongated sipe portions towards the centerline of the tire. Optionally, each intermediate sipe portion comprises said radially outer undulated sipe portion, radially inner sipe portion, and the transition portion.

The features of the first aspect and/or second aspect, or of one or more of their embodiments, can also be combined with the third aspect. Merely for the sake of conciseness such combinations have not been literally reiterated in their entirety herein.

In a fourth aspect, the invention is directed to a metal blade (such as a steel blade), particularly for molding a sipe of a tire tread, the blade comprising a first elongated metal sheet having a first end region and a second end region, and comprising an elongated undulated portion between its first end region and its second end region. Moreover, the blade comprises a second elongated metal sheet having a first end region and a second end region, as well as an elongated undulated portion provided between its first end region and its second end region, wherein the elongated undulated portion of the second elongated metal sheet is essentially parallel to the elongated undulated portion of the first elongated metal sheet. Furthermore, the metal blade comprises a joint metal sheet portion connecting the first end region of the first elongated metal sheet and the first end region of the second elongated metal sheet, and, optionally, extending away from the second end region of the first elongated metal sheet and the second end region of the second elongated metal sheet.

For instance, such a special metal blade may be used to mold a sipe according to the previously mentioned aspects of the present invention, or one or more of their embodiments.

In one embodiment, each of the first elongated metal sheet, the second elongated metal sheet, and the joint metal sheet portion has a respective elongated length, a metal sheet thickness, and a height, and wherein an upper part of the height of the first elongated metal sheet comprises the elongated undulated portion, and a lower part of the height of the first elongated metal sheet extends essentially linearly along the elongated length of the first elongated metal sheet; and/or an upper part of the height of the second elongated metal sheet comprises the elongated undulated portion, and a lower part of the height of the second elongated metal sheet extends essentially linearly along the elongated length of the second elongated metal sheet. Optionally, the joint metal sheet portion extends essentially linearly along its elongated length and height.

In another embodiment, one or both of the first elongated metal sheet and the second elongated metal sheet may have an elongated transition portion between the elongated undulated portion and the elongated lower part, extending essentially linearly along the elongated metal sheet. The shape of the transition portion transitions between an undulated shape of the undulated portion and a linear shape of the lower part.

In another embodiment, the first elongated metal sheet, the second elongated metal sheet, and the joint metal sheet portion are integrally formed of steel (for instance as a single piece), such as by additive manufacturing, e.g. by 3D-metal printing.

In still another embodiment, one or more of the first elongated metal sheet, the second elongated metal sheet, and the joint metal sheet portion are stamped metal sheets. Optionally, the joint metal sheet portion is integrally formed with one or more of the first elongated metal sheet and the second elongated metal sheet. In another option, the one or more of the first elongated metal sheet, the second elongated metal sheet, and the joint metal sheet portion are one or more of welded, soldered, adhered, or stamped together.

In yet another aspect, the present invention is directed to one or more of a mold portion and mold segment for molding a part of a tire tread portion (such as of the tire tread portion mentioned herein above), wherein the one or more of the mold portion and the mold segment comprise the blade. The mold portion may be mentioned as a tire tread mold portion and the mold segment may be mentioned as a tire tread mold segment.

In another embodiment, the blade is mounted to the mold segment.

Preferably, the mold segment is at least predominantly made of aluminum and/or steel, and the blade is at least predominantly made of steel.

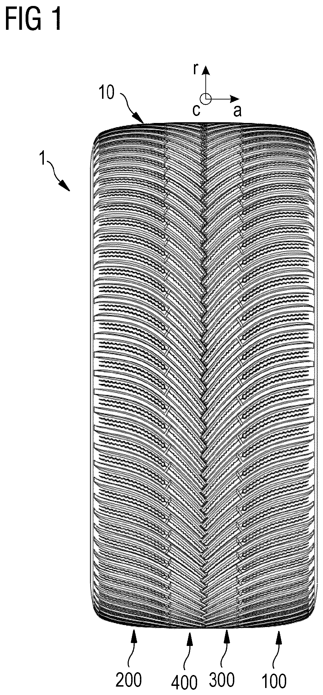

Figure 1 shows a schematic top view of a pneumatic tire 1 according to an embodiment of the present invention. The circumferential tread or, in other words, tread portion 10 comprises in the present non-limiting embodiment four circumferential rows of tread blocks 100, 200, 300, 400 including two axially opposite and outer rows of shoulder tread blocks 100, 200, as well as two axially inner rows of center tread blocks 300, 400. The tire 1 is a directional tire, and/or has a directional tread pattern. In this case, the intended rolling direction points towards downwards and/or towards the bottom of Figure 1.

The axial direction a, the circumferential direction c, and the radial direction r are schematically indicated in multiple Figures herein for the sake of better comprehensibility. The axial direction a is parallel to the axis of rotation of the tire 1. The circumferential direction c is parallel to a circumferential centerline of the tire 1 and perpendicular to the axial direction a. The radial direction r is perpendicular to the axial direction a and to the circumferential direction c. References to one or more of these directions are not necessarily limited to a specific orientation of these directions, unless provided otherwise herein.

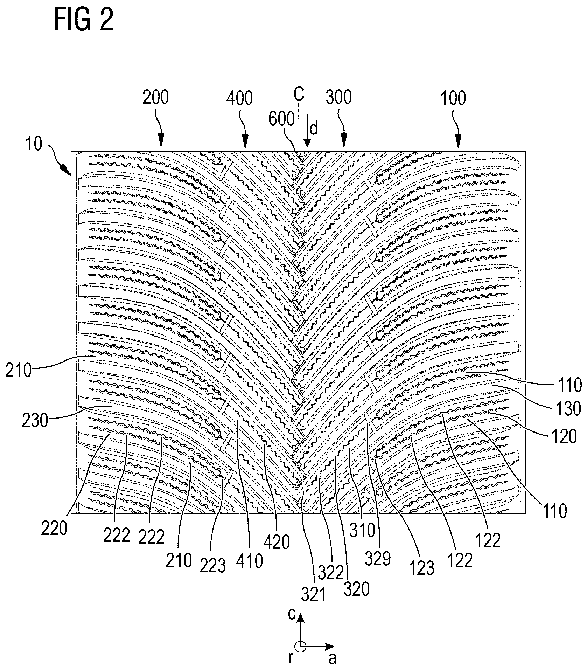

Figure 2 is a schematic enlarged view of the tread portion 10 shown already in Figure 1. According to Figure 2, each row of shoulder tread blocks 100, 200 comprises a plurality of shoulder tread blocks 110, 210 which have elongated shapes extending essentially perpendicular to the radial direction r and which are bent in an axially inner direction towards the circumferential centerline C of the tread portion 10, particularly towards a direction of rotation d of the tire. Furthermore, center tread blocks 310, 410 of the two axially adjacent and circumferential rows of center tread blocks 300, 400 are also bent (or in other words tilted) towards the circumferential centerline C of the tread portion 10, and particularly in or towards the direction of rotation d of the tire or tread portion 10. The center tread blocks 310, 410 have also elongated shapes, particularly extending perpendicularly to the radial direction r of the tire and/or transversely to the circumferential centerline C of the tread portion 10. Adjacent tread blocks 110, 210, 310, 410 of each respective row of tread blocks 100, 200, 300, 400 are circumferentially spaced apart from one another by grooves, particularly lateral grooves 130, 230. Furthermore, the tread portion 10 has a center groove 600 which extends in a zig-zag shape along the circumferential centerline C of the tread portion 10. In particular, the center tread blocks 310, 410 of the two adjacent rows of center tread blocks 300, 400 are staggered at and/or along the circumferential centerline C, or, in other words, along a circumferentially extending axial center portion, of the tread portion 10.

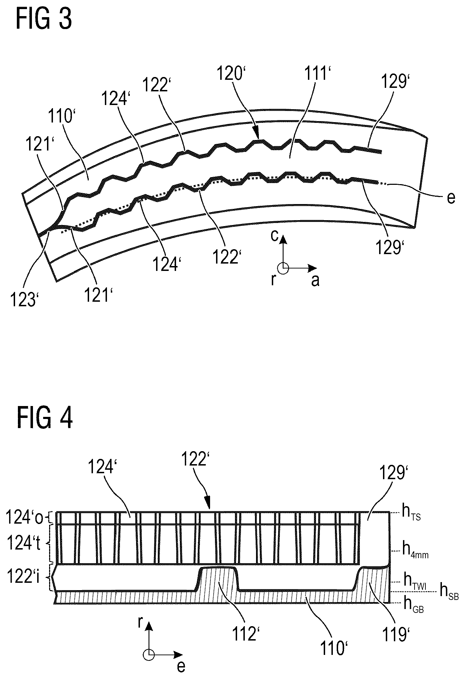

Each of the shoulder tread blocks 110, 210 comprises one sipe 120, 220 (or, in other words, a snow sipe). In particular, such a sipe 120, 220 comprises two elongated sipe portions 122, 222 which extend essentially parallelly to an elongated shape of its shoulder tread block 110, 210. Both elongated sipe portions 120, 220 converge into a joint (common) sipe portion 123, 223 at an axially inner region of the shoulder tread block 110, 210. The joint sipe portion 123, 223 preferably extends also essentially along the elongated direction of the respective tread block 110, 210. Each elongated sipe portion 122, 222 comprises an undulated sipe portion, particularly an undulated intermediate sipe portion, undulating along the elongated extension of the elongated sipe portion 122, 222 and provided between an axially outer end region and an axially inner end region ending in and/or converging into the joint sipe portion 123, 223. Thus, each shoulder tread block 110, 210 comprising a sipe with such a specific shape, may be considered as comprising an essentially tuning fork-shaped sipe. The inventors have discovered that such a shape provides a good compromise between snow traction properties and tread block stiffness. In particular, as two (axially inner) end regions of the elongated sipe portion 122, 222 are joined by the joint sipe portion 123, 223, a tread block portion, such as an elongated ridge formed between both elongated sipe portion 122, 222 is free at one axial end (such as at the axially inner end) and connected to the remaining radially outer tread block or tread block surface at an axially opposite side (such as an axially outer end). Further, details about sipes and their portions according to embodiments of the present invention, e.g., including shapes and/or geometries, have been mentioned herein above, and/or are further described in relation to a similar embodiment shown in Figures 3 and 4 herein below.

Referring again to Figure 2, the center tread blocks 310, 410 of the axially inner center rows of center tread blocks 300, 400 comprise center tread block sipes 320, 420, which extend essentially in parallel to an elongated extension of the respective center tread block 300, 400. In particular, the center tread block sipes 320, 420, extend from one axially outer end of an elongated center tread block 310, 410 to an axially opposite (inner) end of the same center tread block 310, 410. Preferably, and as also shown in Figure 2, each center tread block sipe 320, 420 comprises an elongated undulated portion 322, arranged between two opposite end regions 321, 329 of the sipe 320, wherein the axially outer end region 329 points away from the circumferential center line C of the tread portion 10 and the axially inner end region 321 is provided on the circumferential centerline C of the tread portion 10. Preferably, the axially outer end region 329 is aligned with the joint sipe portion 123 of an (axially) adjacent shoulder tread block 110. Furthermore, the elongated extension of each center tread block 310, 410 is preferably aligned with the elongated extension of an axially adjacent shoulder tread block 110, 210. In other words, circumferentially adjacent center tread blocks 310, 410 and circumferentially adjacent shoulder tread blocks 110, 210 are spaced apart from one another by a common lateral groove 130, 230, e.g., extending from an axially outer shoulder region of the tread portion10 towards the circumferential centerline C of the tread portion 10.

Figure 3 shows an enlarged view of a tread block 110' for use in another tire, or a respective tread portion, according to another embodiment of the present invention. For instance, such a tread block 110' could be used similarly as one of the shoulder tread blocks shown in Figures 1 and 2. According to Figure 3, the tread block 110' has an elongated shape, essentially extending along and/or parallel to an elongated direction e. The tread block 110' comprises a sipe 120' which comprises two predominantly parallelly extending elongated sipe portions 122'. Each of the elongated sipe portions 122' extends along the elongated shape of the tread block 110' and comprises an axially outer end region 129' and an axially inner end region 121' ending and/or merging into the joint portion 123'. In particular, both axially inner end regions 121' converge and/or merge into the joint portion 123', which extends essentially parallel to the elongated direction e into an axially inner direction. Between the axially inner end region 121' and the axially outer end region 129', each elongated sipe portion 122' comprises an intermediate sipe portion 124' which comprises an undulated portion, or, in other words a portion having a wave shape extending along the elongated direction e. Both intermediate sipe portions 124' extend essentially parallel to each other. In the present non-limiting example, the wave shape has eight minima and eight maxima. Furthermore, both elongated sipe portions 122' form a ridge 111' of the tread block 110' between them which is laterally connected to the remaining radially outer(most) tread block surface at an axially outer end, particularly circumferentially between both end regions 129' of the sipe 120'. Both axially outer end regions 129' can also be considered as dead ends of the elongated sipe portions 122' in an axially outer area of the tread block 110'.

Figure 4 shows a schematic partially transparent side view, or cut view respectively, essentially along the elongated direction e of Figure 3, showing a radial height distribution or profile of one of the elongated sipe portions 122' of the sipe in the tread block 110'. As visible in Figure 4, the elongated sipe portion 122' comprises the intermediate sipe portion 124' which comprises the radially outer undulated sipe portion 124'o which is undulated along the elongated direction e. Moreover, the intermediate sipe portion 124' comprises a transition (or an intermediate transition) sipe portion 124't between the radially outer undulated sipe portion 124'o and a radially inner sipe portion 122'i. In particular, the radially inner sipe portion 122'i extends linearly along the elongated direction e, whereas the transition sipe portion 122't is also undulated along the elongated direction e but continuously transitions between the undulated shape of the radially outer undulated sipe portion 124'o to the linearly extending shape of the radially inner sipe portion 122'i. In other words, in the transition sipe portion 124't the undulated or wavy shape is becoming smaller in amplitude perpendicular to the elongated direction e (and along a radially inner direction r) until it is linear at a radially inner side of the transition sipe portion 124't. The linearly shaped radially inner (or innermost) sipe portion 122'i can optionally be interrupted by at least one protrusion 112' of the tread block 110', protruding in a radially outer direction as shown in the embodiment of Figure 4. Such an additional protrusion may enhance tread block stiffness. Optionally, such as in case of relatively long tread blocks, two or more of such protrusions may be provided (e.g., spaced apart from one another) along the elongated extension of the tread block. The axially outer end region 129' is preferably also extending linearly along the elongated direction e. The radially outermost surface of the sipe, or particularly of the elongated sipe portion 122' is at the radial height h_{TS} which corresponds to the radially outermost tread surface at the position of the tread block 110'. The indicated height h_{GB} corresponds to the bottom of a groove (not explicitly shown in Figure 4), such as of a laterally and/or circumferentially extending groove, delimiting the tread block 110' in the tread portion. In the previous embodiment of Figures 1 and 2, a groove 130, 230 can, e.g., have such a groove bottom adjacent the tread block. Thus, referring again to Figure 4, the distance between the radial height h_{GB} and h_{TS} corresponds to the maximum radial height of the tread block 110'. The radial height h_{SB} indicates the radial height or position of the radially innermost sipe bottom. The radial height h_{TWI} corresponds to a radial height of a tread wear indicator (not shown), such as a radially outermost surface of a physical treadwear indicator in a groove adjacent the tread block 110'. In typical passenger car tire applications, such a radial height of a treadwear indicator is about 1.6 mm measured from the bottom of the groove. Another radial height indicated in Figure 4 is the height h₄ₘₘ which corresponds to a (recommended) remaining tread block height of 4 mm, measured from the bottom of the groove (such as measured radial outwards from h_{GB}). Such a relative height h₄ₘₘ is often considered as a recommendation to exchange passenger car winter tires, e.g., in order to provide still good snow and/or wet grip. Thus, upon treadwear, the tread block 110' will first face the road with its undulated radially outer portion 124'o and even when worn down to the height h₄ₘₘ, the tread block 110' still faces the road with the transition portion 124't which comprises still an undulated shape along the elongated direction e, offering still a good snow grip.

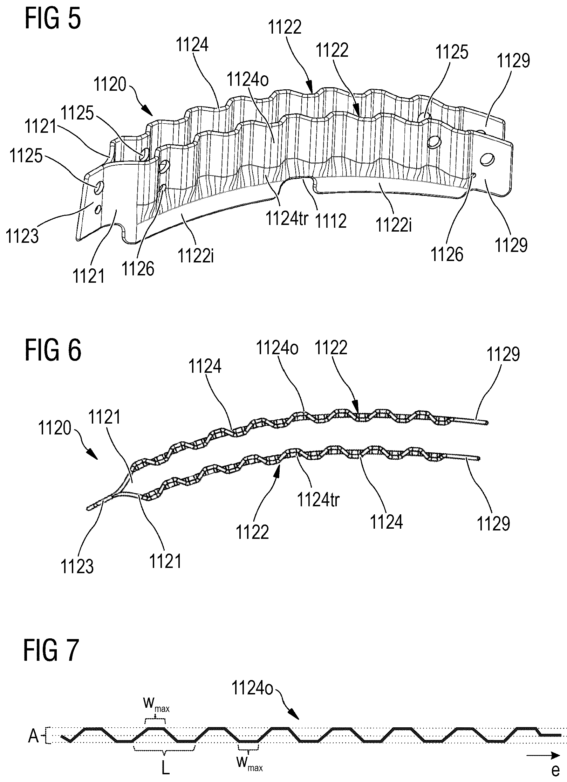

Figure 5 shows an embodiment of a metal blade 1120 for molding a sipe, such as a sipe of a tread portion or tread block as shown in Figures 3 and 4. The metal blade 1120 comprises portions which correspond (or are, in other words, complementary) to respective portions of a sipe molded with the blade 1120. In particular, the blade 1120 has a first elongated metal sheet 1122 and a second elongated metal sheet 1122. Each of the elongated metal sheets 1122, which are preferably bent or curved, has a first end region 1121 and an opposite, second end region 1229. Between both end regions 1121, 1229, each metal sheet 1122 has an intermediate portion 1224 comprising an upper undulated portion 1124o and a transition portion 1124t. A lower portion 1122i extends linearly along an elongated direction of each metal sheet 1122. In particular, the metal blade 1120 extends essentially along its elongated length, has a height and a metal sheet thickness. An upper part of the blade 1120 may be mounted to a mold for molding a (snow) sipe in a tread portion of a tire. Thus, typically an upper area of the metal blade 1120 will disappear in a mold holding the metal blade 1120 during molding. For instance, the blade 1120 may be mounted to a tread mold or tread mold segment (not shown) via one or more apertures 1125 provided in an upper portion of the metal blade 1120. Some of further apertures 1126 provided essentially at a height between the undulated portion 1124o and the transition portion 1124t may be provided as venting holes for avoiding air inclusions during tire tread cure. The lower part 1122i of each elongated metal sheet is, e.g., suitable to form the bottom of a corresponding elongated sipe. The elongated lower portion 1122i comprises an aperture 1112. However, the elongated lower portion 1122i may also be devoid of such an aperture 1112. The transition portion 1124t has at its upper end a wavy portion corresponding to the undulated shape of the undulated portion 1124o. Along its height, the shape of the transition portion 1124t transitions towards its lower end into an elongated straight and/or linear shape corresponding to the shape of the elongated linearly extending lower portion 1122i. Such a continuous decrease in amplitude of the undulated shape helps to obtain an improved snow biting effect of a corresponding sipe molded with the metal blade 1120. Both elongated metal sheets 1122 converge with their end portions 1221 into a joint metal sheet portion 1123 which extends essentially in parallel to the elongated metal sheets 1122 and away from these metal sheets 1122. The joint metal sheet portion 1123 can, e.g., serve to mold the joint sipe portion of the sipe shown in Figures 3 and 4.

Figure 6 provides a top view of the blade 1120 already shown in Figure 5, using the same reference signs where appropriate. The predominantly parallel extension of both elongated metal sheets 1122 is visible. Both intermediate portions 1124, as well as the end portions 1129, are circumferentially spaced apart from one another.

Figure 7 is a schematic representation of the undulated upper (or uppermost) portion 1124o of one of the elongated metal sheets as shown in Figures 5 and 6. In particular, a wavelength of the undulated portion along the elongated direction e of the elongated metal sheet is shown with a constant wavelength L. Such a parameter L is preferably within a range of 3 mm to 30 mm. Moreover, in the present example, the undulated or wavy shape is truncated, wherein the width of a maximum and/or minimum of the wave pattern Wₘₐₓ is preferably within a range of 0.5 mm to 5 mm. An amplitude A, which is here defined as the distance between a maximum and a minimum of the wavelength, is preferably within a range of 0.6 mm to 10 mm. The same dimensions may apply to a radially outer undulated portion of an elongated sipe portion, or an intermediate sipe portion, respectively, such as described herein above.

Preferably, the whole metal blade 1120 (which is preferably made of steel) according to Figures 5 and 6 is 3D-printed, which allows efficiently forming the relatively complex tuning fork-like shape of the blade 1120, including its undulated upper portion 1124o and transition portion 1124t.

It is re-emphasized that the features of the aforementioned aspects and further embodiments may be combined with one another.

## Claims

1. A tire having a circumferential tread portion (10) comprising:
a first circumferential row (100) of shoulder tread blocks (110) which extend from a first circumferential shoulder portion of the tread portion (10) towards a circumferential centerline (C) of the tread portion and which are bent in a direction of rotation of the tire (1);
a second circumferential row (200) of shoulder tread blocks (210) which extend from a second circumferential shoulder portion of the tread portion (10), said second circumferential shoulder portion being axially opposite to the first shoulder portion, towards the circumferential centerline (C) and which are bent in the direction of rotation of the tire (1);
at least two circumferential rows (300, 400) of center tread blocks (410, 310) arranged axially between the first circumferential row (100) of shoulder tread blocks (110) and the second circumferential row (200) of shoulder tread blocks (210);
wherein at least one shoulder tread block (110, 210) of the shoulder tread blocks has an elongated shape bent in the direction of rotation and comprises a sipe (120, 220), wherein the sipe (120, 220) comprises:
i) two elongated sipe portions (122, 222), wherein each of the elongated sipe portions has an axially inner end region, an axially outer end region, and an intermediate sipe portion extending between the axially inner end region and the axially outer end region, and wherein both intermediate sipe portions of the elongated sipe portions extend essentially in parallel to each other and along the elongated shape of the shoulder tread block (110, 210), and
ii) a joint sipe portion (123, 223) extending essentially along the elongated shape of the shoulder tread block (110, 210);
and wherein the elongated sipe portions (122, 222) converge into the joint sipe portion (123, 223).

2. The tire according to claim 1, wherein each of the intermediate sipe portions comprises an undulated sipe portion which is undulated along the elongated sipe portion; and/or wherein both axially inner end regions of the elongated sipe portions converge into an axially outer end region of the joint sipe portion (123, 223).

3. The tire according to at least one of the previous claims, wherein each of the intermediate sipe portions comprises:
a) a radially outer undulated sipe portion, extending with an undulated shape along the elongated sipe portion;
b) a radially inner intermediate sipe portion, extending with an essentially linear shape along the elongated sipe portion; and
c) a transition portion, provided radially between the radially outer undulated sipe portion and the radially inner intermediate sipe portion, which has a shape radially transitioning from the undulated shape of the radially outer undulated sipe portion into the linear shape of the radially inner intermediate sipe portion along the elongated sipe portion.

4. The tire according to at least one of the previous claims, wherein each of the elongated sipe portions (122, 222) has an elongated length which is from 5 to 30 times larger than an elongated length of the joint sipe portion (123, 223).

5. The tire according to at least one of the previous claims, wherein the joint sipe portion (123, 223) ends at an axially inner surface of the shoulder tread block (110, 210) so as to form an axially inner opening at the axially inner surface of the shoulder tread block (110, 210); and/or wherein the joint sipe portion (123, 223) extends from its axially outer end region linearly towards the circumferential centerline (C) of the tire (1).

6. The tire according to at least one of the previous claims, wherein the axially outer end region of each elongated sipe portion (122, 222) is formed as a dead end within an axially outer area of the shoulder tread block (110, 210); and/or wherein both axially outer end regions of the elongated sipe portions (122, 222) are circumferentially spaced apart from each other.

7. The tire according to at least one of the previous claims to, wherein at least one center tread block (310, 410) of the center tread blocks comprises a center tread block sipe (320, 420) which is essentially aligned with the joint sipe portion (123, 223) of an axially adjacent shoulder tread block (110, 210).

8. The tire according to claim 7, wherein the center tread block sipe (320, 420) has an elongated shape comprising i) two opposite and linearly extending end portions, and ii) an undulated intermediate portion extending between the opposite and linearly extending end portions.

9. The tire according to at least one of the previous claims, wherein axially inner end regions of center tread blocks (310, 410) of a first row of the rows of center tread blocks (300, 400) and axially inner end regions of center tread blocks (310, 410) of an adjacent second row of the rows of center tread blocks are staggered along the circumferential centerline (C) of the tread portion (10).

10. A tire having a circumferential tread portion (10) comprising tread blocks (110, 210, 310, 410), wherein at least one of the tread blocks has an elongated shape extending transversely to a circumferential centerline (C) of the tread portion (10), said at least one tread block (110, 210, 310, 410) comprising a sipe (120, 220, 320, 420) which comprises:
I ) a pair of elongated sipe portions (122, 222) extending predominantly along the elongated shape of the tread block (110, 210, 310, 410), and
ii) a joint sipe portion (123, 223) extending along the elongated shape of the tread block, wherein the elongated sipe portions (122, 222) converge into the joint sipe portion (123, 223).

11. A tire having a circumferential tread portion (10) comprising tread blocks (110, 210, 310, 410), wherein at least one of the tread blocks (110, 210, 310, 410) comprises a sipe (120, 220, 320, 420) comprising at least one elongated sipe portion (122, 222) extending transversely to a circumferential centerline (C) of the tread portion (10), wherein the elongated sipe portion (122, 222) comprises:
a) a radially outer sipe portion, extending with an undulated shape along the elongated sipe portion (122, 222);
b) a radially inner sipe portion, extending with an essentially linear shape along the elongated sipe portion (122, 222); and
c) a transition portion, provided radially between the radially outer undulated sipe portion and the radially inner sipe portion, and having a shape radially transitioning from the undulated shape of the radially outer undulated sipe portion to the linear shape of the radially inner sipe portion along the elongated sipe portion (122, 222).

12. The tire according to claim 11, wherein the shape of the transition portion continuously transitions from the undulated shape to the linear shape along a radially inner direction.

13. The tire according to claim 11 or 12, wherein the undulated shape comprises one or more of:
(i) a wavelength along the elongated sipe portion (122, 222) within a range 3 mm to 30 mm;
(ii) an amplitude essentially perpendicular to the elongated sipe portion (122, 222) and a radial direction of the tire (1) within a range of 0.3 mm to 5 mm; and
(iii) a wave shape having truncated maxima.

14. The tire according to at least one of the claims 11 to 13, wherein the radially outer undulated sipe portion extends from a radially outermost surface of the tread block (110, 210, 310, 410) in a radially inner direction over 10% to 20% of a total radial height of the tread block (110, 210, 310, 410); wherein the transition portion transitions from the radially outer undulated sipe portion to the radially inner sipe portion over 30% to 50% of the total radial height of the tread block (110, 210, 310, 410); and wherein a radially inner side of the transition portion is radially below 4 mm of the total radial height of the tread block (110, 210, 310, 410), measured in an outer radial direction from a bottom of a groove of the tread portion (10) which is adjacent the tread block (110, 210, 310, 410).

15. The tire according to at least one of the claims 11 to 14, wherein the sipe (120, 220, 320, 420) comprises two of the elongated sipe portions (122, 222), wherein each elongated sipe portion comprises an axially inner end region, an axially outer end region, and an intermediate sipe portion, wherein both intermediate sipe portions of the elongated sipe portions (122, 222) extend essentially parallelly through the tread block (110, 210, 310, 410) and are bent in a direction of rotation of the tire (1), and wherein the sipe (120, 220, 320, 420) further comprises a joint sipe portion (123, 223), wherein both axially inner end regions of the elongated sipe portions (122, 222) converge into the joint sipe portion (123, 223) which extends away from the axially inner end regions of the elongated sipe portions ((122, 222) towards the circumferential centerline (C) of the tire (1).
